# EUROPEAN PATENT APPLICATION

(11) **EP 1 970 987 A2**
(43) Date of publication of application: **17.09.2008**
(21) Application number: 08152002.5
(22) Date of filing: 27.02.2008
(51) Int. Cl.: H01M 8/04, H01M 16/00, B60H 1/32

(54) **Fuel cell system and air conditioner using the same**

(30) Priority: 12.03.2007 KR 20070024223
(71) Applicant: Samsung Electronics Co., Ltd., Suwon-si, Gyeonggi-Do (KR)
(72) Inventor: Wu, Seong Je, Dongan-gu, Anyang-si Gyeonggi-do (KR); Kim, Dong Kwan, Gyeonggi-do (KR); Kim, Kyung Hoon, Sanghyeon-dong, Yonin-si Gyeonggi-do (KR)
(74) Representative: Grünecker, Kinkeldey, Stockmair & Schwanhäusser Anwaltssozietät

(57) **Abstract**

The air conditioner has a variable load to undergo a rapid change in instantaneous power consumption. The fuel cell system supplies electricity generated by reacting fuel with oxygen to the air conditioner. The fuel cell system stores the generated electricity if the instantaneous power consumption of the air conditioner is lowered and supplies the stored electricity together with the generated electricity to the air conditioner if the instantaneous power consumption is increased.

## Description

### BACKGROUND

### 1. Field

The present invention relates to a fuel cell system and an air conditioner using the same, and more particularly, to a fuel cell system, which can normally supply power to an air conditioner having a variable load that undergoes a rapid change in power consumption, and an air conditioner using the same.

### 2. Description of the Related Art

A fuel cell system is an apparatus that converts chemical energy generated through oxidation of fuel to electric energy. The fuel cell system is used as a drive source for a vehicle or is connected to an electricity system to supply power to a variety of electric devices.

As described in Korean Patent Application Publication No. 2003-0078973, a conventional fuel cell system includes a reformer to generate hydrogen from fuel, a fuel cell stack to generate electric energy by reacting hydrogen with oxygen, an electric energy output unit to supply electric energy generated by the fuel cell stack to a load, and a controller to control the fuel cell system.

When hydrogen and oxygen are provided to the fuel cell stack, the conventional fuel cell system causes the hydrogen and oxygen to react to generate electricity and supplies the generated electricity to a load connected to the fuel cell system.

However, this conventional fuel cell system is not suitable for use with a variable load, which undergoes a rapid change in compression capacity and thus undergoes a radical change in power consumption, such as a variable-capability scroll compressor described in Korean Patent Application Publication No. 2002-0066659 or a capacity-adjustable scroll compressor of Korean Patent Application Publication No. 2005-0008475.

That is, the fuel cell system generally changes the amount of electricity generated by changing the amount of fuel supplied. However, it is not possible to change the amount of electricity generated by the fuel cell stack in a short time since it takes a rather long time for the change in the amount of fuel supplied to cause a change in the amount of electricity generated. The scroll compressors described above undergo a rapid change in the power consumption in a short time since they repeat an operation with a compression capacity of 0% (unloading operation) and an operation with a compression capacity of 100% (loading operation) in a few seconds. Thus, it is difficuft for the conventional fuel cell system to appropriately supply required power to such compressors.

### SUMMARY

Therefore, it is an aspect of the invention to provide a fuel cell system, which can normally supply power to a variable load that undergoes a rapid change in power consumption, and an air conditioner using the same.

Additional aspects and/or advantages of the invention will be set forth in part in the description which follows and, in part, will be apparent from the description, or may be learned by practice of the invention.

The foregoing and/or other aspects of the present invention may be achieved by providing an air conditioner using a fuel cell system, the air conditioner having a variable load to undergo a rapid change in instantaneous power consumption, the fuel cell system supplying electricity generated by reacting fuel with oxygen to the air conditioner, wherein the fuel cell system stores the generated electricity if the instantaneous power consumption of the air conditioner is lowered and supplies the stored electricity together with the generated electricity to the air conditioner if the instantaneous power consumption is increased.

The fuel cell system stores the generated electricity if the instantaneous power consumption is lower than power generated by the fuel cell system and supplies the stored electricity together with the generated electricity to the air conditioner if the instantaneous power consumption is higher than the power generated by the fuel cell system.

The variable load is a variable-capacity compressor that repeats a loading operation with a compression capacity of 100% and an unloading operation with a compression capacity of 0% in cycles, an average operating ratio of the variable-capacity compressor being determined using a ratio between durations of the loading operation and the unloading operation.

The power generated by the fuel cell system is determined according to the average operating ratio of the variable load.

The fuel cell system includes an electrical storage to store the electricity, wherein the electrical storage has a capacity that affords a quarter or less of total power consumption required for loading and unloading operations of one cycle.

The foregoing and/or other aspects of the present invention may also be achieved by providing a fuel cell system including a fuel cell to generate electricity by reacting fuel with oxygen; and an electrical storage to store the electricity generated by the fuel cell, wherein the fuel cell and the electrical storage are connected to an air conditioner having a variable load, and wherein the electricity generated by the fuel cell is stored in the electrical storage if instantaneous power consumption of the air conditioner is lowered and the electricity stored in the electrical storage, together with the electricity generated by the fuel cell, is supplied to the air conditioner if the instantaneous power consumption is increased.

The electrical storage stores the generated electricity if the instantaneous power consumption is lower than power generated by the fuel cell and supplies the stored electricity to the air conditioner if the instantaneous power consumption is higher than the power generated by the fuel cell.

The variable load is a variable-capacity compressor that repeats a loading operation with a compression capacity of 100% and an unloading operation with a compression capacity of 0% in cycles, an average operating ratio of the variable-capacity compressor being determined using a ratio between durations of the loading operation and the unloading operation, and wherein the power generated by the fuel cell is determined according to the average operating ratio of the variable load.

The fuel cell system further includes an electrical storage to store the electricity, wherein the electrical storage has a capacity that affords a quarter or less of total power consumption required for loading and unloading operations of one cycle.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram of a fuel cell system and an air conditioner using the same according to an embodiment of the present invention;
FIGS. 2A and 2B are sectional views of a variable-capacity compressor of FIG. 1;
FIG. 3 is a graph showing an operating ratio of the variable-capacity compressor shown in FIGS. 2A and 2B;
FIG. 4 is a graph showing the output of an electric storage associated with the operating ratio of the variable-capacity compressor shown in FIG. 3; and
FIG. 5 is a block diagram of an air conditioner integrated with a fuel cell system according to the present invention.

### DETAILED DESCRIPTION OF THE EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

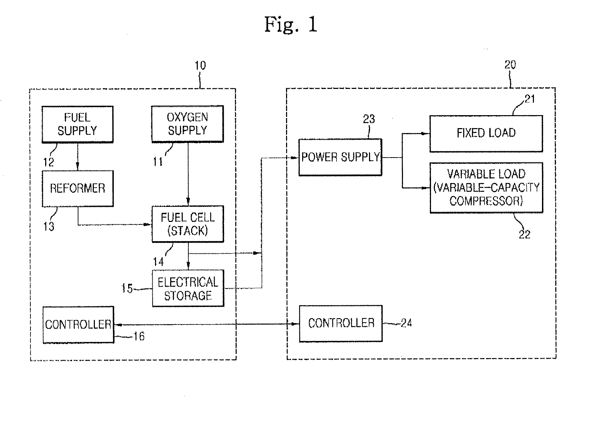

As shown in FIG. 1, a fuel cell system and an air conditioner using the same according to an embodiment of the present invention include an air conditioner 20 to cool and heat a room and a fuel cell system 10 to supply electricity to the air conditioner 20.

The air conditioner 20 includes a fixed load 21 such as an outdoor heat exchanger blower fan (not shown) and an electrically-operated valve (not shown), a variable-capacity compressor 22 which is a variable load, a power supply 23 that transfers electricity supplied from the fuel cell system 10 to the outdoor heat exchanger blower fan or the variable-capacity compressor 22, and a controller 24 that controls the operation of the air conditioner 20.

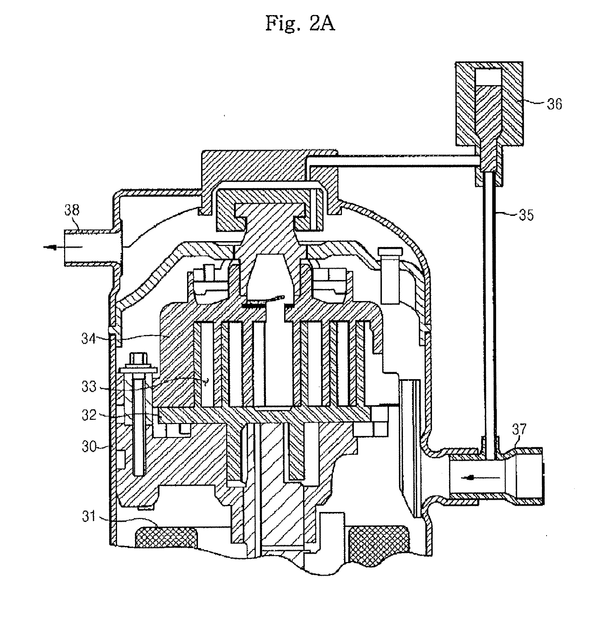

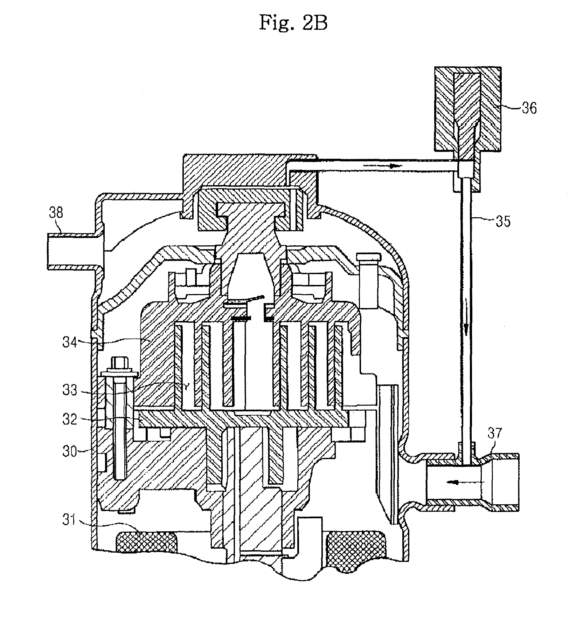

As shown in FIGS. 2A and 2B, the variable-capacity compressor 22 includes a casing 30 having an inlet 37 and an outlet 38, a motor 31 provided in the casing 30, an orbiting scroll 32 that rotates by torque of the motor 31, and a fixed scroll 34 that defines a compression space 33 between the fixed scroll 34 and the orbiting scroll 32. A bypass pipe 35, which connects the inlet 37 and an upper portion of the fixed scroll 34 to each other, is mounted on the casing 30. A solenoid type Pulse Width Modulated (PWM) valve 36 is mounted on the bypass pipe 35.

In FIG. 2A, the PWM valve 36 is closed to close the bypass pipe 35 and therefore a refrigerant supplied to the compression space 33 through the inlet 37 is compressed and discharged through the outlet 38. This operation is a loading operation in which the compression capacity (or operating ratio) of the variable-capacity compressor 22 is 100%. In FIG. 2B, the PWM valve 36 is opened to open the bypass pipe 35 and therefore a refrigerant supplied to the compression space 33 through the inlet 37 is not compressed and instead is supplied back to the compression space 33 through the bypass pipe 35. This operation is an unloading operation in which the compression capacity (or operating ratio) of the variable-capacity compressor 22 is 0%.

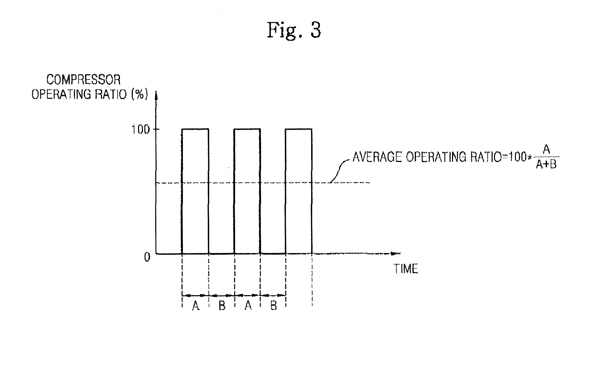

As shown in FIG. 3, the variable-capacity compressor 22 repeats the loading operation and the unloading operation in regular cycles. A loading operation time A and an unloading operation time B in each cycle is determined according to a required cooling capability. In FIG. 3, the X axis represents time and the Y axis represents the operating ratio of the variable-capacity compressor 22. The horizontally dashed line in FIG. 3 represents an average operating ratio of the variable-capacity compressor 22 when the variable-capacity compressor 22 operates at a duty ratio of FIG. 3. The average operating ratio is calculated using a formula "Average Operating Ratio = (Loading Operating Time/1 Cycle)*100".

The controller 24 determines the duty ratio of the loading and unloading operation times according to a required cooling capability and opens or closes the PWM valve 36 according to the duty ratio. The controller 24 also calculates the average operating ratio of the variable-capacity compressor 22 using the average operating ratio calculation formula described above.

The fuel cell system 10 includes an oxygen supply 11, a fuel supply 12, a reformer 13, a fuel cell 14, an electrical storage 15, and a controller 16. The oxygen supply 11 supplies oxygen to the fuel cell 14 and the fuel supply 12 supplies fuel to the reformer 13. This fuel may be gaseous fuel such as natural gas or methane or liquid fuel such as methanol or hydrazine. The reformer 13 generates hydrogen by heating the fuel and provides the hydrogen to the fuel cell 14.

The fuel cell 14 includes a number of unit cells (stack) (not shown). Each unit cell includes an electrolyte membrane (not shown), an air electrode (cathode) (not shown), and a fuel electrode (anode) (not shown). When hydrogen is supplied to the fuel electrode, it is separated into hydrogen ions and electrons. The hydrogen ions are moved to the air electrode through the electrode membrane and the electrons are moved to the air electrode through an external circuit. In the air electrode, oxygen supplied to it reacts with hydrogen ions to form water. Thus, in each unit cell, oxygen reacts with hydrogen to generate electricity and water.

Since the fuel cell 14 is connected to the power supply 23 of the air conditioner 20, electricity generated at the fuel cell 14 is provided to the air conditioner 20. The power generated by the fuel cell 14 is determined according to the average operating ratio of the variable-capacity compressor 22. More specifically, the level of power that is generated by the fuel cell 14 is determined to be a level which affords (or covers) power consumption required for the variable-capacity compressor 22 and power consumption required for the fixed load 21 when the variable-capacity compressor 22 operates at the average operating ratio.

Consequently, as the loading operation time ratio of the variable-capacity compressor 22 increases, the average operating ratio increases and therefore the power generated by the fuel cell 14 increases. On the other hand, as the loading operation time ratio of the variable-capacity compressor 22 decreases, the average operating ratio decreases and therefore the power generated by the fuel cell 14 decreases.

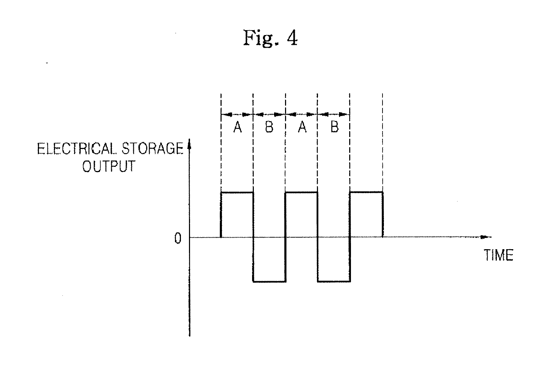

The electrical storage 15 includes a super capacitor and a secondary battery and is connected to the fuel cell 14 and the power supply 23 of the air conditioner 20. As shown in FIG. 4, the electrical storage 15 receives and stores electricity generated by the fuel cell 14 when the variable-capacity compressor 22 is in unloading operation and discharges the stored electricity to the air conditioner 20 when the variable-capacity compressor 22 is in loading operation. In FIG. 4, the X axis represents time and the Y axis represents the output of the electrical storage.

When the variable-capacity compressor 22 is in an unloading operation, power generated by the fuel cell 14 is higher than power consumption by the air conditioner 20 and therefore a small portion of the electricity generated by the fuel cell 14 is provided to the air conditioner 20 to drive the fixed load 21 or the like of the air conditioner 20 and the remaining portion is stored in the electrical storage 15. On the other hand, when the variable-capacity compressor 22 is in a loading operation, power consumption by the air conditioner 20 is higher than power generated by the fuel cell 14 and therefore not only the electricity generated by the fuel cell 14 but also the electricity stored in the electrical storage 15 are provided to the air conditioner 20 to allow the air conditioner 20 to operate normally.

The capacity of the electrical storage 15 is sufficient if it has a level which affords only a quarter of the power consumption required for a one-cycle operation of the variable-capacity compressor 22. An operation pattern which requires the electrical storage 15 to supply the highest power to the air conditioner 20 corresponds to the case where the loading operation time and the unloading operation time are equal. In this case, the electrical storage 15 has to supply a quarter of the power consumption required for a one-cycle operation of the variable-capacity compressor 22 to the air conditioner 20 in the loading operation of each cycle Accordingly, it is preferable to select the capacity of the electrical storage 15 to have an appropriate level based on the cycle (or period) of the variable-capacity compressor 22.

The controller 16 controls the fuel cell system 10 and, particularly, controls power generated by the fuel cell 14. When it is necessary to determine the power generated by the fuel cell 14, the controller 16 performs data communication with the controller 24 of the air conditioner 20 to confirm the average operating ratio of the variable-capacity compressor 22 and then determines the power generated by the fuel cell 14 according to the confirmed average operating ratio. To accomplish this, the controller 16 previously stores data regarding the levels of power generated by the fuel cell in association with the average operating ratios of the variable-capacity compressor 22. When the power generated by the fuel cell 14 has been determined, the controller 16 controls the fuel supply 12 and the reformer 13 to allow the fuel cell 14 to output a target generated power.

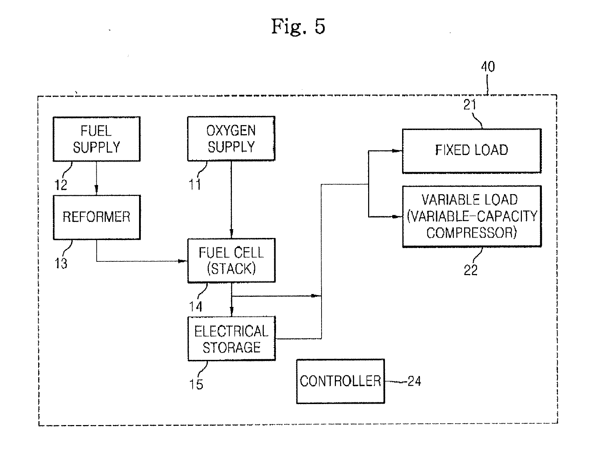

FIG. 5 shows an air conditioner integrated with a fuel cell system. Since the air conditioner 40 of FIG. 5 includes a fuel cell system, one controller 24 controls both the air conditioner 40 and the fuel cell system. Accordingly, it is not necessary to perform data communication between the controllers 16 and 24 as shown in FIG. 1.

In FIG. 5, a fuel cell 14, an electrical storage 15, a fixed load 21, and a variable-capacity compressor 22 are all connected to an electricity system 50 so that the fuel cell 14 or the electrical storage 15 may provide electricity to the electricity system 50 or the electricity system 50 may supply commercial electricity to the fixed load 21 or the variable-capacity compressor 22 when needed. A description of other components is similar to that of FIG. 1.

The following is a description of how a fuel cell system and an air conditioner using the same according to the present invention operate. If the user of the air conditioner 20 sets a target temperature and inputs an operation command to the air conditioner 20, then the controller 24 of the air conditioner 20 calculates a required cooling capability based on the difference between the target temperature and the room temperature. The controller 24 then sets loading and unloading operation times (duty ratio) of the variable-capacity compressor 22 according to the calculated cooling capability. Here, power consumption required for the air conditioner 20 is not high and therefore the fuel cell 14 is not activated and the electrical storage 15 provides a small amount of electricity to the air conditioner 20.

When the duty ratio has been set, the controller 24 of the air conditioner 20 calculates an average operating ratio of the variable-capacity compressor 22 using an average operating ratio calculation formula and performs data communication with the controller 16 of the fuel cell system 10 to inform the controller 16 of the average operating ratio. The controller 16 of the fuel cell system 10 determines power generated by the fuel cell system 10 with reference to the data regarding the levels of power generated by the fuel cell in association with the average operating ratios of the variable-capacity compressor. The controller 16 then controls the fuel supply 12 and the like to allow the fuel cell system 10 to output a target generated power.

When the fuel cell system 10 outputs a generated power corresponding to the average operating ratio of the variable-capacity compressor 22, the controller 16 of the fuel cell system 10 performs data communication with the controller 24 of the air conditioner 20 to inform the controller 24 of that fact. Then, the controller 24 of the air conditioner 20 causes the variable-capacity compressor 22 to perform the loading or unloading operation while opening or closing the PWM valve 36 according to the duty ratio.

When the variable-capacity compressor 22 is in loading operation, the power generated by the fuel cell 14 alone does not afford power consumption by the air conditioner 20 and therefore electricity stored in the electrical storage 15 is additionally supplied to the air conditioner 20. On the other hand, when the variable-capacity compressor 22 is in unloading operation, the power generated by the fuel cell 14 exceeds the power consumption required for the air conditioner 20 and therefore the surplus power is stored in the electrical storage 15.

Although the air conditioner applied to the present invention has been exemplified by an air conditioner having a variable-capacity compressor in the above description, the present invention can be applied to any other type of air conditioner that undergoes a rapid change in the power consumption, for example an inexpensive air conditioner that repeatedly turns on and off its compressor at intervals of several minutes.

As is apparent from the above description, the present invention allows even a fuel cell system with a low rate of output change to normally supply power to an air conditioner that undergoes a rapid change in the power consumption.

In addition, in the present invention, the capacity of the electrical storage only has to afford up to a quarter of the power consumption required for a one-cycle operation of the variable-capacity compressor. This allows the fuel cell system to use a small-capacity electrical storage, thereby reducing the manufacturing the cost and size of the fuel cell system.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. An air conditioner using a fuel cell system, comprising:
a variable load to undergo a rapid change in instantaneous power consumption,
wherein the fuel cell system supplies electricity generated by reacting fuel with oxygen to the air conditioner, and
the fuel cell system stores the generated electricity if the instantaneous power consumption of the air conditioner is lowered and supplies the stored electricity together with the generated electricity to the air conditioner if the instantaneous power consumption is increased.

2. The air conditioner according to claim 1, wherein the fuel cell system stores the generated electricity if the instantaneous power consumption is lower than power generated by the fuel cell system and supplies the stored electricity together with the generated electricity to the air conditioner if the instantaneous power consumption is higher than the power generated by the fuel cell system.

3. The air conditioner according to claim 2, wherein the variable load is a variable-capacity compressor that repeats a loading operation with a compression capacity of 100% and an unloading operation with a compression capacity of 0% in cycles, an average operating ratio of the variable-capacity compressor being determined using a ratio between durations of the loading operation and the unloading operation.

4. The air conditioner according to claim 3, wherein the power generated by the fuel cell system is determined according to the average operating ratio of the variable load.

5. The air conditioner according to claim 3, wherein the fuel cell system includes an electrical storage to store the electricity, wherein the electrical storage has a capacity that affords a quarter or less of total power consumption required for loading and unloading operations of one cycle.

6. A fuel cell system comprising:
a fuel cell to generate electricity by reacting fuel with oxygen; and
an electrical storage to store the electricity generated by the fuel cell,
wherein the fuel cell and the electrical storage are connected to an air conditioner having a variable load, and
wherein the electricity generated by the fuel cell is stored in the electrical storage if instantaneous power consumption of the air conditioner is lowered and the electricity stored in the electrical storage, together with the electricity generated by the fuel cell, is supplied to the air conditioner if the instantaneous power consumption is increased.

7. The fuel cell system according to claim 6, wherein the electrical storage stores the generated electricity if the instantaneous power consumption is lower than power generated by the fuel cell and supplies the stored electricity to the air conditioner if the instantaneous power consumption is higher than the power generated by the fuel cell.

8. The fuel cell system according to claim 7, wherein the variable load is a variable-capacity compressor that repeats a loading operation with a compression capacity of 100% and an unloading operation with a compression capacity of 0% in cycles, an average operating ratio of the variable-capacity compressor being determined using a ratio between durations of the loading operation and the unloading operation, and
wherein the power generated by the fuel cell is determined according to the average operating ratio of the variable load.

9. The fuel cell system according to claim 8, further comprising:
an electrical storage to store the electricity,
wherein the electrical storage has a capacity that affords a quarter or less of total power consumption required for loading and unloading operations of one cycle.
